# EUROPEAN PATENT APPLICATION

(11) **EP 4 325 835 A1**
(43) Date of publication of application: **21.02.2024**
(21) Application number: 22810234.9
(22) Date of filing: 12.04.2022
(51) Int. Cl.: H04N 5/225

(54) **CAMERA MOTOR, CAMERA MODULE AND ELECTRONIC DEVICE**

(30) Priority: 27.05.2021 CN 202110587160
(71) Applicant: Huawei Technologies Co., Ltd., Shenzhen, Guangdong 518129 (CN)
(72) Inventor: SUN, Zhanli, Shenzhen, Guangdong 518129 (CN); LI, Zhangcheng, Shenzhen, Guangdong 518129 (CN); LI, Sikun, Shenzhen, Guangdong 518129 (CN); HUANG, Pei, Shenzhen, Guangdong 518129 (CN)
(74) Representative: Grünecker Patent- und Rechtsanwälte PartG mbB
(86) International application number: PCT/CN2022/086327
(87) International publication number: WO 2022/247501

(57) **Abstract**

This application provides a camera motor, a camera module, and an electronic device, and relates to the field of electronic device technologies, to simplify a production process and improve reliability of a connection between components. The camera motor includes a base, a carrier, and a connecting part. The carrier is configured to: mount and fasten a to-be-driven object, and the carrier is formed on an outer surface of the connecting part. At least a part of the connecting part is located inside the carrier. The connecting part and the carrier are integrally formed, and the connecting part is configured to: support and connect the carrier on and to the base. The camera motor in this application is configured to implement automatic focusing or optical image stabilization of the camera module.

## Description

This application claims priority to Chinese Patent Application No. 202110587160.0, filed with the China National Intellectual Property Administration on May 27, 2021 and entitled "CAMERA MOTOR, CAMERA MODULE, AND ELECTRONIC DEVICE", which is incorporated herein by reference in its entirety.

### TECHNICAL FIELD

This application relates to the field of electronic device technologies, and in particular, to a camera motor, a camera module, and an electronic device.

### BACKGROUND

Currently, electronic devices such as a mobile phone, a tablet computer, and a personal computer (personal computer, PC) each are generally provided with a camera module used for photo/video shooting. To make images clear from photo/video shooting, automatic focusing (automatic focusing, AF) and optical image stabilization (Optical Image Stabilization, OIS) are required. Implementations of automatic focusing and optical image stabilization require a camera motor. The camera module includes an optical lens and an image sensor. The camera motor is configured to drive the optical lens to move relative to the image sensor, to implement automatic focusing or optical image stabilization.

Currently, the camera motor used in the camera module is generally implemented by assembling tier-2 materials together through bonding such as glue dispensing. With increasing tier-2 materials of the camera motor, a production process of the camera motor becomes increasingly complex. This is not conducive to automatic and efficient production. In addition, connection reliability in a glue dispensing solution between a plurality of components is low, with possible quality defects.

### SUMMARY

Embodiments of this application provide a camera motor, a camera module, and an electronic device, to simplify a production process and improve reliability of a connection between components.

To achieve the foregoing objectives, the following technical solutions are used in embodiments of this application.

According to a first aspect, some embodiments of this application provide a camera motor, including a base, a carrier, and a connecting part. The carrier is configured to: mount and fasten a to-be-driven object, and the carrier is formed on an outer surface of the connecting part. At least a part of the connecting part is located inside the carrier. The connecting part and the carrier are integrally formed, and the connecting part is configured to: support and connect the carrier on and to the base.

In the camera motor provided in an embodiment of this application, the carrier is formed on the outer surface of the connecting part, the at least a part of the connecting part is located inside the carrier, and the connecting part and the carrier are integrally formed, that is, the at least a part of the connecting part is wrapped inside the carrier. Therefore, the carrier and the connecting part may become a single integral tier-2 material, to reduce a tier-2 material and simplify a production process, so as to facilitate automatic and efficient production. In addition, compared with that in a glue dispensing solution between components, reliability of a connection between the carrier and the connecting part is improved.

In a possible implementation of the first aspect, the camera motor may be a vertical motor, and the base and the carrier are connected through a spring plate. Specifically, the connecting part includes the spring plate, and the spring plate includes a fastening portion and an elastic arm portion. The fastening portion is located inside the carrier. The elastic arm portion is connected to the base, and the elastic arm portion is fastened to the carrier through the fastening portion. When the connecting part includes the spring plate, the carrier is formed on an outer surface of the spring plate, at least a part of the spring plate is wrapped inside the carrier, so that the spring plate and the carrier become a single integral tier-2 material, to reduce a tier-2 material and simplify a production process, so as to facilitate automatic and efficient production. In addition, compared with that in a glue dispensing solution between the components, a connection between the carrier and the spring plate is very reliable.

In a possible implementation of the first aspect, there are a plurality of spring plates, and at least one spring plate is integrally formed with the carrier. The carrier and the base may be connected through the plurality of spring plates. In this way, the carrier may be integrally formed with any spring plate; the carrier may alternatively be integrally formed with a plurality of any spring plates; and the carrier may alternatively be integrally formed with all the spring plates. In such an implementation, the carrier and the spring plate may become a single integral tier-2 material, to simplify a production process and improve connection reliability.

In a possible implementation of the first aspect, the plurality of spring plates each include an upper spring plate and a lower spring plate. The upper spring plate and the lower spring plate are respectively disposed close to two opposite sides of the carrier. The carrier is formed on an outer surface of the upper spring plate, and the carrier and the upper spring plate are integrally formed to form an integral material; or the carrier is formed on an outer surface of the lower spring plate, and the carrier and the lower spring plate are integrally formed to form an integral material; or the carrier is formed on outer surfaces of the upper spring plate and the lower spring plate, and the carrier, the upper spring plate, and the lower spring plate are integrally formed to form an integral material. The spring plates each may be disposed in a manner of including the upper spring plate and the lower spring plate, so that both the upper and lower sides of the carrier are connected to the base through the spring plates. In this way, a connection between the carrier and the base is more reliable, and vibration generated when the carrier is driven to move is stable. Based on this, the carrier may be integrated with any one of the upper spring plate and the lower spring plate, or may be integrated with the upper spring plate and the lower spring plate.

In a possible implementation of the first aspect, the carrier and the spring plate are formed through injection molding. A function of the spring plate includes: enabling the carrier to have an elastic connection relationship with the base, so that the carrier can move relative to the base; and powering on an electromagnetic coil on the carrier. Therefore, the spring plate needs to have specific strength and good elasticity and conductivity. The spring plate is generally made of a metal material, and the carrier is usually formed through injection molding of plastic. In this way, an integrated structure of the carrier and the spring plate may be implemented by using an injection process.

In a possible implementation of the first aspect, the camera motor includes a Hall magnet and a Hall sensor. The Hall magnet is wrapped inside the carrier, and the Hall magnet and the carrier are integrally formed. The Hall sensor is disposed on the base, and the Hall magnet and the Hall sensor cooperate, to detect relative positions of the base and the carrier. In a closed-loop motor, relative positions of a carrier and a base are detected, to more accurately drive a to-be-driven object on the base to an accurate target position. In other words, a Hall magnet is disposed on the carrier. In a related technology, the Hall magnet is bonded to the carrier by glue dispensing. This requires a complex production process, with poor connection reliability and possible quality defects. Therefore, to resolve these problems, the Hall magnet is wrapped inside the carrier, and the Hall magnet and the carrier are integrally formed.

In a possible implementation of the first aspect, the Hall magnet is disposed close to a side that is of the carrier and that faces the Hall sensor. A position of the Hall magnet in the carrier is set as required. For example, the Hall magnet may be disposed close to the side that is of the carrier and that faces the Hall sensor, so that the Hall magnet and the Hall sensor more easily cooperate.

In a possible implementation of the first aspect, the carrier and the Hall magnet are formed through injection molding. The carrier is usually formed through injection molding of plastic, and the Hall magnet is magnetic and is generally made of a metal material. Therefore, an integrated structure of the carrier and the Hall magnet may be implemented by using an injection process.

In a possible implementation of the first aspect, an implementation of the driving motor is shown as an example. The carrier may be a cubic structure, and a middle portion of the carrier has a circular accommodating hole. The circular accommodating hole is configured to: mount and fasten the to-be-driven object (which may be an optical lens). In this way, the spring plates are disposed at four corners of the carrier, to ensure balance of the carrier.

In a possible implementation of the first aspect, the camera motor may be a periscope camera motor. The carrier of the periscope camera motor is connected to the base through a convex spherical portion, and the carrier may rotate around the convex spherical portion that abuts against the base. Specifically, the connecting part includes a substrate and the convex spherical portion formed on the substrate. The substrate is located inside the carrier, the substrate and the carrier are integrally formed, and the convex spherical portion abuts against the base. In this way, the carrier, the substrate, and the convex spherical portion are integrated, that is, become a single integral tier-2 material, to reduce a tier-2 material and simplify a production process, so as to facilitate automatic and efficient production. In addition, a connection between components is reliable.

In a related technology, the carrier abuts against the base through the convex spherical portion, and the carrier may rotate around the convex spherical portion relative to the base, where the convex spherical portion is formed by bonding a spherical mechanical part to the carrier. Such a connection manner is not reliable. There are two main reasons. First, reliability of the bonding manner is low. Second, in cooperation between the spherical mechanical part and the carrier, the spherical mechanical part is prone to suffer a rotation force of the spherical mechanical part. However, at a position at which the carrier and the spherical mechanical part cooperate, there is no corresponding structure that can limit rotation of the spherical mechanical part relative to the carrier, and only bonding force between the spherical mechanical part and the carrier is used to bear the force, resulting in further reducing reliability. Therefore, to avoid unreliability, the connecting part includes the convex spherical portion and the substrate. The convex spherical portion is formed on the substrate, so that the connecting part including the substrate and the convex spherical portion is not a pure spherical structure, that is, the substrate and the convex spherical portion have different forms. When the convex spherical portion subjects to a force that enables the convex spherical portion to rotate, the substrate cooperates with the carrier, rotation of the convex spherical portion relative to the carrier may be limited by form structures of the components, to further improve connection reliability, so that a connection is reliable when the substrate is wrapped inside the carrier.

In a possible implementation of the first aspect, in a direction from the base to the carrier, a cross-sectional outer profile of the substrate is greater than a cross-sectional outer profile of the convex spherical portion, and the substrate is completely wrapped inside the carrier. In the periscope camera motor, the carrier is driven to move relative to the base, and the convex spherical portion is mainly affected by an impact force in a direction from the base to the inside of the carrier. To reduce impact of the convex spherical portion on the carrier, a stress area of the carrier may be increased, to reduce pressure. Specifically, the cross-sectional outer profile of the base is greater than the cross-sectional outer profile of the convex spherical portion. In this way, a profile of a cross section of the substrate in direct contact with the carrier is larger than a cross section of the convex spherical portion, to reduce pressure and reduce impact on the carrier. In addition, relative positions of the convex spherical portion and the carrier do not change, to further improve reliability.

In a possible implementation of the first aspect, the substrate is a connecting plate, and the convex spherical portion is disposed in a middle portion of the connecting plate. The substrate may be plate-shaped, and the plate-shaped substrate may be easily wrapped inside the carrier. In addition, it can be ensured that the cross-sectional outer profile of the substrate is greater than the cross-sectional outer profile of the convex spherical portion in a direction from the base to the inside of the carrier based on reducing a material.

In a possible implementation of the first aspect, the convex spherical portion is formed through stamping on the substrate. The convex spherical portion may be stamped on the substrate, so that the convex spherical portion and the substrate form an integrated structure.

In a possible implementation of the first aspect, the convex spherical portion is welded on the substrate. The convex spherical portion may be welded on the substrate, so that the convex spherical portion and the substrate form an integrated structure.

In a possible implementation of the first aspect, the convex spherical portion and the substrate are integrally formed through casting. The convex spherical portion and the substrate may be integrally formed through casting, so that the convex spherical portion and the substrate form an integrated structure.

In a possible implementation of the first aspect, an extending direction of the connecting part is parallel to an extending direction of an outer surface that is of the carrier and that is closest to the connecting plate. In this way, a side wall that is of the connecting plate and that faces the convex spherical portion cooperates with the inside of the carrier in a large area. This has a good effect for displacement that is of the convex spherical portion and that is perpendicular to the connecting plate.

In a possible implementation of the first aspect, two ends of the connecting plate extend towards a side away from the convex spherical portion. In a procedure of using the periscope camera motor, a force exerted on the convex spherical portion is mainly caused by vibration that is of the convex spherical portion and that is towards the inside of the carrier. Therefore, to further increase resistance to vibration that is of the convex spherical portion and that is towards the inside of the carrier, and ensure that the relative positions of the convex spherical portion and the carrier do not change, the two ends of the connecting plate extend towards the side away from the convex spherical portion. In this way, the connecting plate has greater tension and buffer for a force that is of the convex spherical portion and that faces the inside of the carrier, to ensure that vibration that is of the convex spherical portion and that faces the inside of the carrier does not change the relative positions of the convex spherical portion and the carrier.

In a possible implementation of the first aspect, the periscope camera motor is generally disposed in the camera module that needs to convert an optical path, and is configured to implement an optical image stabilization function. For example, the carrier is a right angle triangle structure, an oblique edge of the carrier is used to mount and fasten the to-be-driven object (which may be a prism module), and the convex spherical portion is located on a right angle edge of the carrier.

According to a second aspect, some embodiments of this application provide a camera module. The camera module includes the camera motor in any one of the technical solutions in the first aspect and a to-be-driven object. The to-be-driven object is disposed on the carrier of the camera motor, and the to-be-driven object is an optical lens or a prism module.

Because the camera module provided in an embodiment of this application includes the color temperature detection component in any one of the foregoing technical solutions, the camera module and the camera motor can resolve a same technical problem and achieve a same technical effect.

According to a third aspect, some embodiments of this application provide an electronic device. The electronic device includes the camera module according to the second aspect and a controller, the controller is electrically connected to the camera motor of the camera module, and the controller is configured to control the camera motor.

Because the electronic device provided in an embodiment of this application includes the camera module in the foregoing technical solutions, the electronic device and the camera module can resolve a same technical problem and achieve a same technical effect.

### BRIEF DESCRIPTION OF DRAWINGS

FIG. 1 is a schematic diagram of a three-dimensional structure of an electronic device that is a mobile phone from a rear-side view according to an embodiment of this application;
FIG. 2 is an exploded view of an electronic device according to an embodiment of this application;
FIG. 3 is a schematic diagram of a structure of a mainboard and a camera module of an electronic device according to an embodiment of this application;
FIG. 4 is a cross-sectional schematic view of a camera module of an electronic device according to an embodiment of this application;
FIG. 5 is a schematic diagram of a structure of a camera module integrated with a periscope camera motor according to an embodiment of this application;
FIG. 6 is a schematic diagram of a three-dimensional structure of a vertical camera motor according to an embodiment of this application;
FIG. 7 is an exploded view of a vertical camera motor according to an embodiment of this application;
FIG. 8 is a schematic diagram of a structure in which a carrier, an upper spring plate, and a lower spring plate of a vertical camera motor are connected through bonding in a related technology;
FIG. 9 is a schematic diagram of a structure of a periscope camera motor according to an embodiment of this application;
FIG. 10 is an exploded view of a carrier, a convex spherical portion 1, and a base of a periscope camera motor in a related technology;
FIG. 11 is a schematic diagram of an electrical connection between a mainboard and a component in a camera module inside an electronic device according to an embodiment of this application;
FIG. 12 is a schematic diagram of a structure in which a carrier of a camera motor is formed on an outer surface of a connecting part according to an embodiment of this application;
FIG. 13 is a side view of a vertical camera motor according to an embodiment of this application;
FIG. 14 is an exploded view of a periscope camera motor according to an embodiment of this application;
FIG. 15 is a perspective view of a mounted periscope camera motor according to an embodiment of this application;
FIG. 16 is a schematic diagram of a structure in which a substrate of a periscope camera motor is a connecting plate according to an embodiment of this application; and
FIG. 17 is a schematic diagram of a structure in which two ends of a connecting plate of a periscope camera motor extend towards a side away from a convex spherical portion according to an embodiment of this application.

### Reference numerals:

1-Housing; 11-Bezel; 12-Back cover; 121-Mounting hole; 2-Camera module; 21-Camera component; 22-Flash; 23-Optical lens; 24-Image sensor; 25-Prism module; 3-Mainboard; 4-Decorative cover; 5-Camera motor; 51-Upper housing; 52-Carrier; 521-Convex spherical portion; 522-Circular accommodating hole; 53-Base; 54-Spring plate; 541-Upper spring plate; 542-Lower spring plate; 543-Fastening portion; 544-Elastic arm portion; 55-Electromagnetic coil; 56-Drive magnet; 57-Hall magnet; 58-Chip; 59-Circuit board; 6-Substrate; and 7-Controller

### DESCRIPTION OF EMBODIMENTS

Terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the description in embodiments of this application, unless otherwise specified, "a plurality of" means two or more than two.

In addition, in embodiments of this application, terms of direction such as "upper", "lower", "left", and "right" are defined relative to an illustrated placement position of a component in accompanying drawings. It should be understood that the terms of direction are relative concepts and are used for description and clarification of "relative to", and may be changed accordingly as a placement position of the component in the accompanying drawing changes.

In embodiments of this application, unless otherwise clearly specified and limited, a term "connection" should be understood in a broad sense. For example, the "connection" may be a fixed connection, a detachable connection, or an integral connection, may be a direct connection, or may be an indirect connection through an intermediate medium.

In embodiments of this application, a term "include", "comprise", or any other variant is intended to cover a non-exclusive inclusion, so that a procedure, a method, an object, or an apparatus that includes a series of elements not only includes those elements but also includes other elements that are not expressly listed, or further includes elements inherent to such a procedure, method, object, or apparatus. An element preceded by "includes a ..." does not, without more constraints, preclude the existence of additional identical elements in the procedure, method, object, or apparatus includes the element.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the word like "example" or "for example" is intended to present a related concept in a specific manner.

This application provides an electronic device. The electronic device is a type of electronic device having a shooting function. Specifically, the electronic device may be a portable electronic apparatus or another proper electronic apparatus. For example, the electronic device may be a mobile phone, a tablet computer, a personal computer, a wearable device, a camera, or a camcorder.

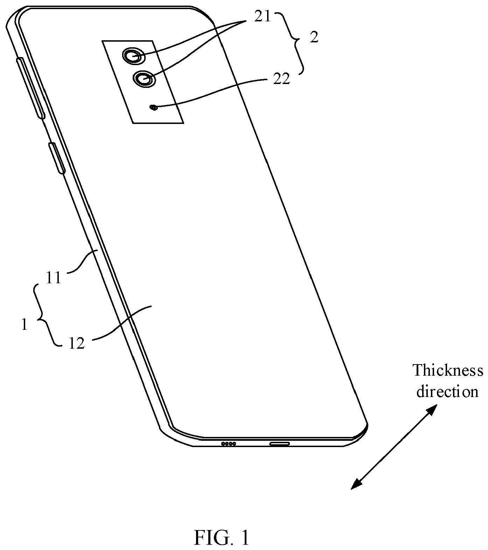

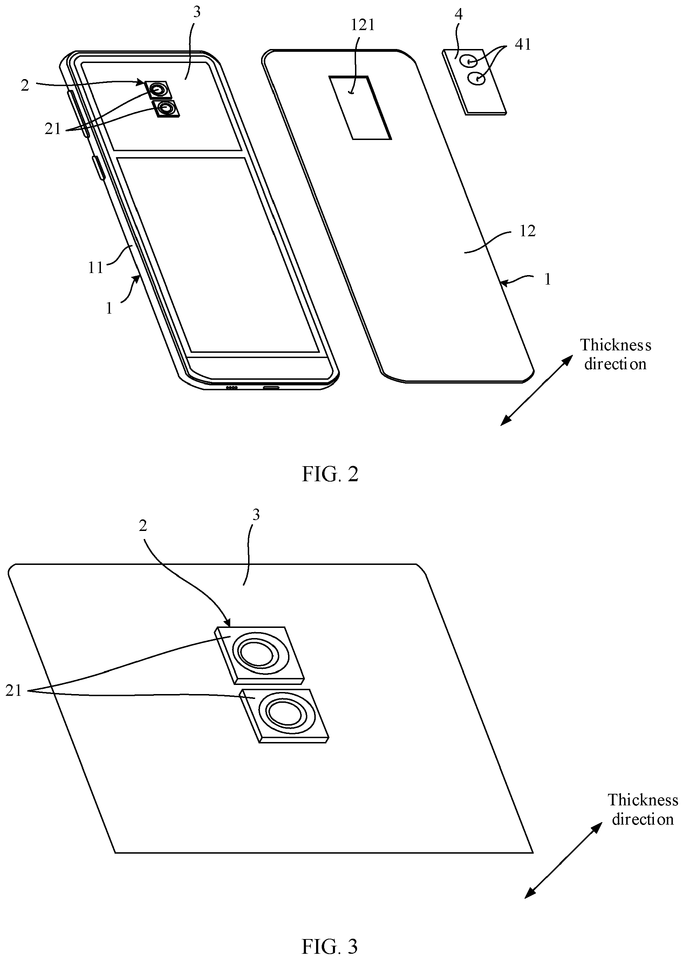

FIG. 1 is a schematic diagram of a three-dimensional structure of an electronic device that is a mobile phone from a rear-side view according to some embodiments of this application. FIG. 2 is an exploded view of the electronic device shown in FIG. 1.

In this embodiment, an example in which the electronic device is the mobile phone is used. The electronic device includes a housing 1, a camera module 2, a mainboard 3, and a decorative cover 4.

The housing 1 is a box structure formed by assembling a front panel (not shown in the figure), a bezel 11, and a back cover 12. Components of the electronic device are disposed in the housing 1, and the housing 1 is configured to protect these components.

A mounting hole 121 is disposed on the back cover 12, the mounting hole 121 is configured to mount the decorative cover 4, and the decorative cover 4 protects the camera module 2 inside the housing 1.

The camera module 2 includes a camera component 21 and a flash 22. The camera component 21 is configured to shoot a photo/video, and the flash 22 is configured to flash when light is insufficient for shooting the photo/video, to increase brightness.

FIG. 3 is a schematic diagram of a structure of the mainboard 3 and the camera module 2 of the electronic device in FIG. 2. In the electronic device, there may be one or more camera components 21. The camera module 2 may be used as a front-facing camera, or may be used as a rear-facing camera. The camera component 21 in the camera module 2 includes but is not limited to a wide-angle camera component, a long-focus camera component, a depth-of-field camera component, a micro camera component, and the like. This is not specifically limited herein. FIG. 1 and FIG. 2 show only an example in which the camera module 2 includes two camera components 21 and the camera module 2 is used as a rear-facing camera. This should not be considered as a special limitation on this application.

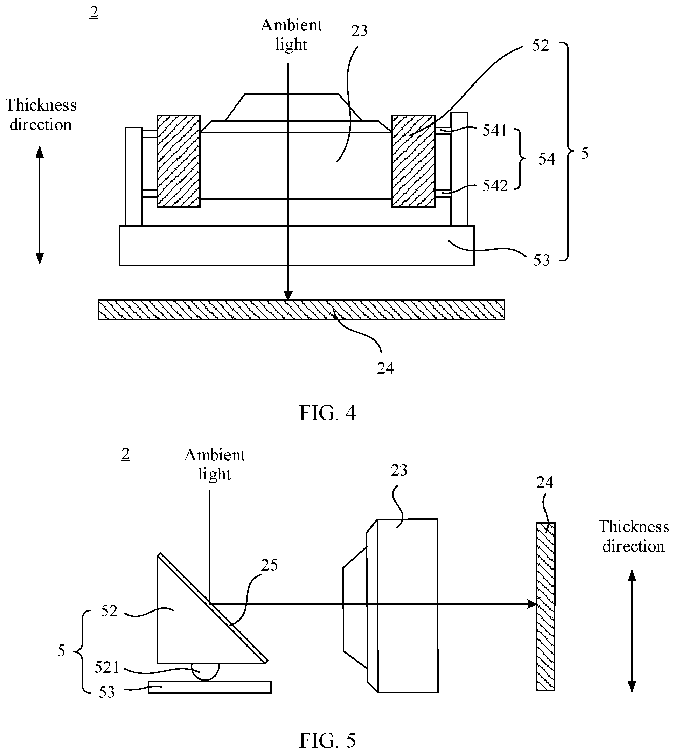

FIG. 4 is a cross-sectional schematic view of the camera module 2. Imaging of the camera module 2 mainly depends on an optical lens 23 and an image sensor 24. The optical lens 23 is used, so that ambient light is focused, imaged, and transmitted to the image sensor 24. The image sensor 24 is connected to a processing unit (for example, a chip) on the mainboard 3, to implement imaging.

To make images clear from photo/video shooting, automatic focusing and optical image stabilization need to be performed on the camera module 2. In a general implementation of automatic focusing, a distance between the optical lens 23 and the image sensor 24 is changed by using a camera motor 5, so that an imaging focus of the optical lens 23 just falls on the image sensor 24. Optical image stabilization is to drive, by using a camera motor, the optical lens 23 or an optical path transfer part (for example, a prism) to move, so that ambient light in the optical lens 23 does not shake.

As shown in FIG. 4, in some embodiments, the optical lens 23 and the image sensor 24 are disposed in a stacked manner in a thickness direction of the electronic device. In this case, the camera motor 5 is vertical, and is configured to drive the optical lens 23 to move, to implement automatic focusing or optical image stabilization. FIG. 5 is a schematic diagram of a structure of a camera module 2 integrated with a periscope camera motor 5. In some embodiments, the optical lens 23 and the image sensor 24 are disposed side by side in an extending direction of the electronic device. In this case, ambient light needs to be refracted by 90 degrees. This requires a prism module 25 to move. A corresponding camera motor 5 is of a periscope type, and is configured to drive the prism module to move, to implement optical image stabilization.

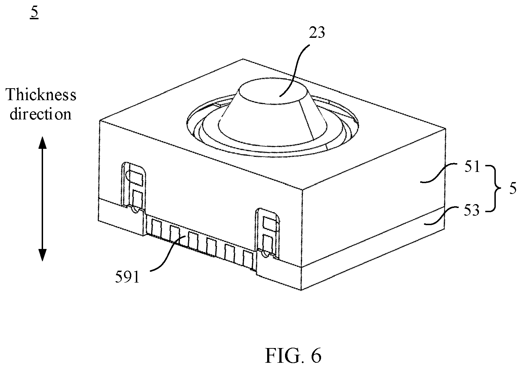

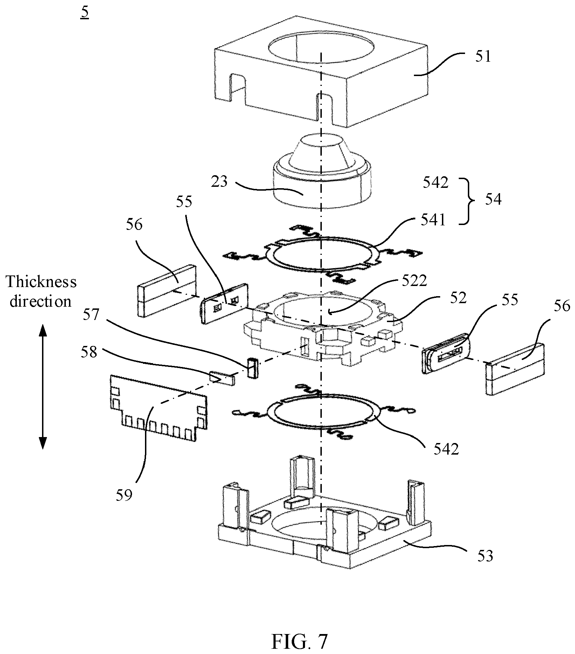

Specifically, FIG. 6 is a schematic diagram of a three-dimensional structure of the vertical camera motor 5, and FIG. 7 is a schematic diagram of an exploded structure of the vertical camera motor 5. The vertical camera motor 5 generally includes an upper housing 51, a carrier 52, and a base 53. The upper housing 51 is fastened to the base 53, the carrier 52 is between the base 53 and the upper housing 51, and the carrier 52 is connected to the base 53 through a spring plate 54 (including an upper spring plate 541 and a lower spring plate 542). An electromagnetic coil 55 is disposed on the carrier 52, and a drive magnet 56 is disposed on the base 53. Electromagnetic forces of the drive magnet 56 and the electromagnetic coil 55 may make the carrier 52 move relative to the base 53, so that the camera motor 5 drives the optical lens 23 to move.

The vertical camera motor 5 drives the optical lens 23 to move in a direction (referring to a vertical direction in the figure) away from or close to the image sensor 24, to implement a focusing function. The vertical camera motor 5 drives the optical lens 23 to perform movement of a corresponding position based on shake of the electronic device, to perform corresponding compensation for shake of ambient light, so as to implement an optical image stabilization function. The vertical camera motor 5 generally drives the optical lens 23 to move in a direction (referring to a horizontal direction in the figure) perpendicular to the direction away from or close to the image sensor 24.

The upper spring plate 541 and the lower spring plate 542 of the vertical camera motor may not only elastically connect the carrier 52 to the base 53, but also be used to supply power to the electromagnetic coil 55.

In the camera module 2 integrated with the vertical camera motor 5, to accurately control relative positions of the carrier 52 and the base 53, the relative positions of the carrier 52 and the base 53 need to be detected. In this way, as shown in FIG. 7, a Hall magnet 57 and a Hall sensor need to be disposed. The Hall magnet 57 is disposed on the carrier 52, the Hall sensor (not shown in the figure) is disposed on the base 53, and the Hall magnet 57 and the Hall sensor are configured to detect the relative positions of the carrier 52 and the base 53. Generally, a camera motor 5 with the Hall magnet 57 and the Hall sensor is referred to as a closed-loop motor, and a camera motor 5 without the Hall magnet 57 and the Hall sensor is referred to as an open-loop motor.

It should be noted that the Hall sensor that is not shown in FIG. 7 is integrated into a chip 58, the chip 58 is disposed on a circuit board 59, and the circuit board 59 is fastened to the base 53.

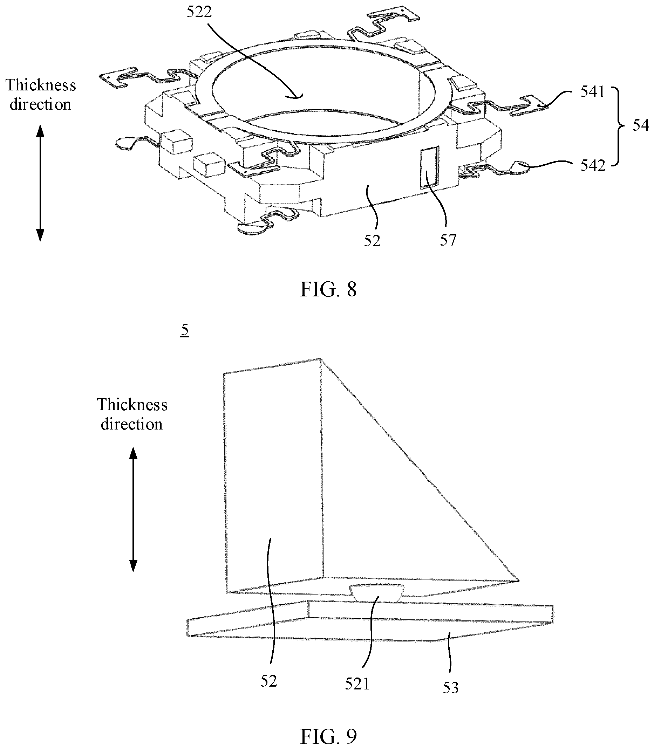

Currently, FIG. 8 is a schematic diagram of a structure in which the carrier 52, the upper spring plate 541, and the lower spring plate 542 of the vertical camera motor 5 are connected through bonding in a related technology. It can be clearly seen that, in the vertical camera motor 5 in the related technology, both the upper spring plate 541 and the lower spring plate 542 are bonded only to a surface of the carrier 52, and a connection between the carrier 52 and the Hall magnet 57 is also bonded in a groove. As a result, a production process of the camera motor 5 is complex, and reliability of a connection between components is low.

FIG. 9 is a schematic diagram of a structure of a periscope camera motor 5. The periscope camera motor 5 includes a housing (not shown in the figure), a carrier 52, and a base 53. The carrier 52 and the base 53 are connected through a convex spherical portion 521. The carrier 52 rotates or shakes on the base 53 by using the convex spherical portion 521 as a pivot. In addition, there may be a plurality of convex spherical portions 521, that is, the carrier 52 may perform single-axis rotation or multi-axis rotation relative to the base 53. In the camera module 2 integrated with the periscope camera motor 5, the prism module 25 is mounted on the carrier 52, and the prism module 25 may reflect/refract ambient light emitted in the thickness direction (referring to a vertical direction in FIG. 5) of the electronic device into ambient light in the extending direction (referring to a horizontal direction in FIG. 5) of the electronic device, to emit into the optical lens 23 and the image sensor 24.

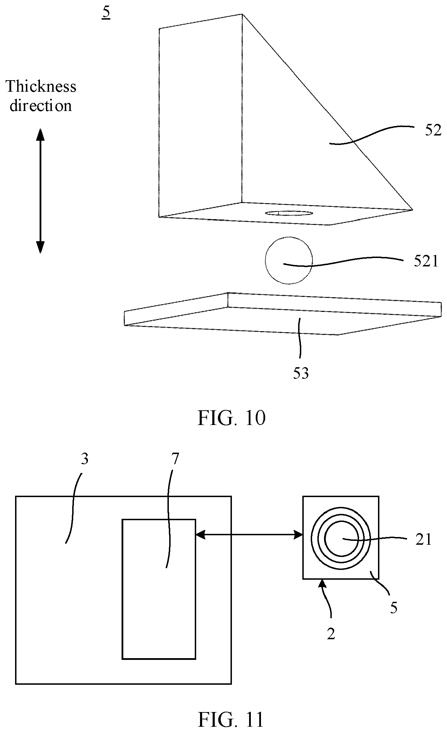

Currently, FIG. 10 is an exploded view of the carrier 52, the convex spherical portion 521, and the base of the periscope camera motor 5 in a related technology. In the periscope camera motor 5 in the related technology, the carrier 52 and the convex spherical portion 521 are two separate materials, and are fastened together by glue dispensing. An assembly precision requirement is high, glue dispensing is inconvenient due to a space limitation, reliability of glue dispensing is low, and consequently, relative positions of the carrier 52 and the convex spherical portion 521 are easily changed.

An embodiment of this application provides a camera module 2, including the camera motor 5 and a to-be-driven object, where the to-be-driven object is disposed on the carrier 52 of the camera motor 5. The to-be-driven object may be the optical lens 23 or the prism module 25 based on a different form.

FIG. 11 is a schematic diagram of an electrical connection between the mainboard 3 and a component in the camera module 2 inside the electronic device. In this embodiment, the electronic device further includes a controller 7. The controller 7 is electrically connected to the camera motor 5 of the camera module 2, and the controller 7 is configured to control running of the camera motor 5.

In some embodiments, the controller 7 is disposed on the mainboard 3. It may be understood that the controller 7 may alternatively be disposed on another structure in the electronic device, for example, disposed on a circuit board on which a universal serial bus (universal serial bus, USB) component is located. FIG. 11 merely shows an example in which the controller 7 is disposed on the mainboard 3. This should not be considered as a special limitation on this application.

Some embodiments of this application provide a camera motor 5, to simplify a complex process and improve component connection reliability in a related technology.

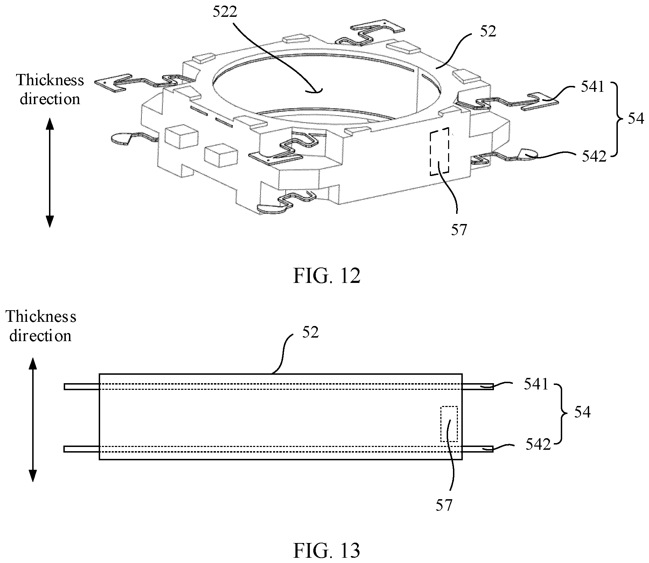

As shown in FIG. 7 and FIG. 12, FIG. 12 is a schematic diagram of a structure in which the carrier 52 is formed on an outer surface of a connecting part. The camera motor 5 includes the base 53, the carrier 52, and the connecting part (the spring plate 54 in the figure is an implementation of the connecting part). The carrier 52 is configured to: mount and fasten a to-be-driven object. The carrier 52 is formed on the outer surface of the connecting part, at least a part of the connecting part is located inside the carrier 52, the connecting part and the carrier 52 are integrally formed, and the connecting part is configured to: support and connect the carrier 52 on and to the base 53.

In the camera motor 5 provided in an embodiment of this application, the carrier 52 is formed on the outer surface of the connecting part, the at least a part of the connecting part is located inside the carrier 52, and the connecting part and the carrier 52 are integrally formed, that is, the at least a part of the connecting part is wrapped inside the carrier 52. Therefore, the carrier 52 and the connecting part may become a single integral tier-2 material, to reduce a tier-2 material and simplify a production process, so as to facilitate automatic and efficient production. In addition, compared with that in a glue dispensing solution between components, reliability of a connection between the carrier 52 and the connecting part is improved.

The carrier 52 and the connecting part are integrally formed, and may be formed by using an injection molding process, so that the at least a part of the connecting part is wrapped by the carrier 52. Injection molding may be one-time injection molding, or may be two-time injection molding. One-time injection molding means that the manufactured connecting part is placed in a corresponding mold, and the carrier 52 is injected and molded in one time, to be an integral material with the connecting part. Two-time injection molding means that a part of the carrier 52 is first injected, and then the manufactured connecting part and the injected part of the carrier 52 are placed in a corresponding mold, to perform second-time injection, so that the carrier 52 and the connecting part are finally to be an integral material.

As shown in FIG. 7, FIG. 12, and FIG. 13, FIG. 13 is a side view of the vertical camera motor 5. In some embodiments, the camera motor 5 is vertical, the base 53 and the carrier 52 are connected through the spring plate 54, the spring plate 54 includes a fastening portion 543 and an elastic arm portion 544, the fastening portion 543 is located inside the carrier 52, the elastic arm portion 544 is connected to the base 53, and the elastic arm portion 544 is fastened to the carrier 52 through the fastening portion 543. Specifically, the fastening portion 543 of the spring plate 54 is wrapped inside the carrier 52, so that the spring plate 54 and the carrier are integrally formed, and the elastic arm portion 544 of the spring plate 54 is configured to connect to the base 53. In this way, at least a part of the spring plate 54 is wrapped inside the carrier 52, so that the spring plate 54 and the carrier 52 become a single integral tier-2 material, to reduce a tier-2 material and simplify a production process, so as to facilitate automatic and efficient production. In addition, compared with that in a glue dispensing solution between components, a connection between the carrier 52 and the spring plate 54 is very reliable. In some embodiments, the carrier 52 and the base 53 may be connected through a plurality of spring plates 54. In this way, the carrier 52 may be integrally formed with any spring plate 54; the carrier 52 may alternatively be integrally formed with a plurality of any spring plates 54; and the carrier 52 may alternatively be integrally formed with all the spring plates 54. In such an implementation, the carrier 52 and the spring plate 54 may become a single integral tier-2 material, to simplify a production process and improve connection reliability.

As shown in FIG. 7, FIG. 12, and FIG. 13, the spring plates 54 each include the upper spring plate 541 and the lower spring plate 542, and the upper spring plate 541 and the lower spring plate 542 are respectively disposed close to two opposite sides of the carrier 52. When the spring plates 54 each include the upper spring plate 541 and the lower spring plate 542, the carrier 52 and the spring plate 54 may be integrated into an integral material in a plurality of implementations. For example, the carrier 52 is formed on an outer surface of the upper spring plate 541, and the carrier 52 and the upper spring plate 541 are integrally formed; or the carrier 52 is formed on an outer surface of the lower spring plate 542, and the carrier 52 and the lower spring plate 542 are integrally formed; or the carrier 52 is formed on outer surfaces of the upper spring plate 541 and the lower spring plate 542, and the carrier 52, the upper spring plate 541, and the lower spring plate 542 are integrally formed.

In addition, the spring plates 54 each include the upper spring plate 541 and the lower spring plate 542, and the upper spring plate 541 and the lower spring plate 542 are respectively disposed close to the two opposite sides of the carrier 52, so that both the upper and lower sides of the carrier 52 are connected to the base 53 through the spring plates 54. In this way, a connection between the carrier 52 and the base 53 is more reliable, and vibration generated when the carrier 52 is driven to move is stable.

As shown in FIG. 7 and FIG. 12, an implementation of the vertical camera motor 5 is shown as an example. The carrier 52 may be a cubic structure, a middle portion of the carrier 52 has a circular accommodating hole 522, and the circular accommodating hole 522 is configured to: mount and fasten the to-be-driven object (which may be the optical lens 23). In this way, the spring plates 54 may be disposed at four corners of the carrier 52, to ensure balance of the carrier 52 during vibration.

A function of the spring plate 54 includes: enabling the carrier 52 to have an elastic connection relationship with the base 53, so that the carrier 52 can move relative to the base 53; and powering on the electromagnetic coil 55 on the carrier 52. Therefore, the spring plate 54 needs to have specific strength and good elasticity and conductivity. The spring plate 54 is generally made of a metal material, and the carrier 52 is usually formed through injection molding of plastic. In this way, an integrated structure of the carrier 52 and the spring plate 54 may be implemented by using an injection molding process. Injection molding may be one-time injection molding, or may be two-time injection molding. One-time injection molding means that the manufactured spring plate 54 is placed in a corresponding mold, and the carrier 52 is injected and molded in one time, to be an integral material with the spring plate 54. Two-time injection molding means that a part of the carrier 52 is first injected, and then the manufactured spring plate 54 and the injected part of the carrier 52 are placed in a corresponding mold, to perform second-time injection, so that the carrier 52 and the spring plate 54 are finally to be an integral material.

As mentioned above, in the camera motor 5, in some implementations, to detect the relative positions of the carrier 52 and the base 53, so as to more accurately drive the to-be-driven object on the base 53 to an accurate target position, the Hall magnet 57 is disposed on the carrier 52, and the Hall sensor is correspondingly disposed on the base 53. In a related technology, the Hall magnet 57 is bonded to the carrier 52 by glue dispensing. This requires a complex production process, with poor connection reliability and possible quality defects.

Therefore, to resolve these problems, as shown in FIG. 12 and FIG. 13, the Hall magnet 57 is wrapped inside the carrier 52, and the Hall magnet 57 and the carrier 52 are integrally formed.

A position of the Hall magnet 57 in the carrier 52 is set as required. As shown in FIG. 7, the Hall magnet 57 may be disposed close to a side that is of the carrier 52 and that faces the Hall sensor, so that the Hall magnet 57 and the Hall sensor more easily cooperate.

The carrier 52 is usually formed through injection molding of plastic, and the Hall magnet 57 is magnetic and is generally made of a metal material. Therefore, an integrated structure of the carrier 52 and the Hall magnet 57 may be implemented by using an injection molding process. Injection molding may be one-time injection molding, or may be two-time injection molding. One-time injection molding means that the manufactured Hall magnet 57 is placed in a corresponding mold, and the carrier 52 is injected and molded in one time, to be an integral material with the Hall magnet 57. Two-time injection molding means that a part of the carrier 52 is first injected, and then the manufactured Hall magnet 57 and the injected part of the carrier 52 are placed in a corresponding mold, to perform second-time injection, so that the carrier 52 and the Hall magnet 57 are finally to be an integral material.

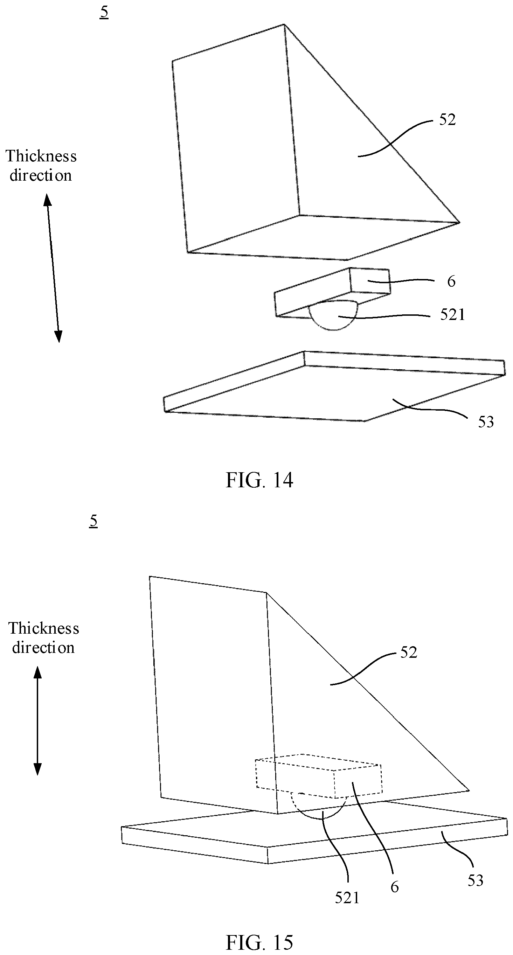

In some embodiments, the camera motor 5 is of a periscope type. FIG. 14 is an exploded view of a periscope camera motor 5. FIG. 15 is a perspective view of the mounted periscope camera motor 5. The carrier 52 and the base 53 of the periscope camera motor 5 are connected through the convex spherical portion 521, and the carrier 52 may rotate around the convex spherical portion 521 that abuts against the base 53. Specifically, the connecting part includes a substrate 6 and the convex spherical portion 521 formed on the substrate 6. The substrate 6 is located inside the carrier 52, the substrate 6 and the carrier 52 are integrally formed, and the convex spherical portion 521 abuts against the base 53. In this way, the carrier 52, the substrate 6, and the convex spherical portion 521 are integrated, that is, become a single integral tier-2 material, to reduce a tier-2 material and simplify a production process, so as to facilitate automatic and efficient production. In addition, a connection between components is reliable.

In a related technology, as shown in FIG. 10, the carrier 52 abuts against the base 53 through the convex spherical portion 521, and the carrier 52 may rotate around the convex spherical portion 521 relative to the base 53, where the convex spherical portion 521 is formed by bonding a spherical mechanical part to the carrier 52. Such a connection manner is not reliable. There are two main reasons. First, reliability of the bonding manner is low. Second, in cooperation between the spherical mechanical part and the carrier 52, the spherical mechanical part is prone to suffer a rotation force of the spherical mechanical part. However, at a position at which the carrier 52 and the spherical mechanical part cooperate, there is no corresponding structure that can limit rotation of the spherical mechanical part relative to the carrier 52, and only bonding force between the spherical mechanical part and the carrier 52 is used to bear the force, resulting in further reducing reliability.

Therefore, in an embodiment of this application, if the convex spherical portion 521 is directly integrally formed with the carrier 52, a connection between the carrier 52 and the convex spherical portion 521 is not reliable enough. To avoid unreliability, the connecting part includes the convex spherical portion 521 and the substrate 6. The convex spherical portion 521 is formed on the substrate 6, so that the connecting part including the substrate 6 and the convex spherical portion 521 is not a pure spherical structure, that is, the substrate 6 and the convex spherical portion 521 have different forms. When the convex spherical portion 521 subjects to a force that enables the convex spherical portion 521 to rotate, the substrate 6 cooperates with the carrier 52, rotation of the convex spherical portion 521 relative to the carrier 52 may be limited, to further improve connection reliability, so that a connection is reliable when the substrate 6 is wrapped inside the carrier 52.

As shown in FIG. 5, the periscope camera motor 5 is generally disposed in the camera module 2 that needs to convert an optical path, and is configured to implement an optical image stabilization function. For example, the carrier 52 is a right angle triangle structure, an oblique edge of the carrier 52 is used to mount and fasten a to-be-driven object (which may be the prism module 25), and the convex spherical portion 521 is located on a right angle edge of the carrier 52.

In the periscope camera motor 5, the carrier 52 is driven to move relative to the base 53, and the convex spherical portion 521 is mainly affected by an impact force in a direction from the base 53 to the inside of the carrier 52. To reduce impact of the convex spherical portion 521 on the carrier 52, a stress area of the carrier 52 may be increased, to reduce pressure. In some embodiments, in a direction from the base 53 to the carrier 52, a cross-sectional outer profile of the substrate 6 is greater than a cross-sectional outer profile of the convex spherical portion 521, and the substrate 6 is completely wrapped inside the carrier 52. In this way, a profile of a cross section of the substrate 6 in direct contact with the carrier 52 is larger than a cross section of the convex spherical portion 521, to reduce pressure and reduce impact on the carrier 52. In addition, the relative positions of the convex spherical portion 521 and the carrier 52 do not change, and reliability is high.

A shape structure of the substrate 6 may be implemented in a plurality of manners. As long as a cross-sectional outer profile of the substrate 6 is greater than a cross-sectional outer profile of the convex spherical portion 521 in a direction that is from the inside of the carrier 52 to the convex spherical portion 521, and the substrate 6 is completely wrapped inside the carrier 52, it can be ensured that no relative displacement occurs between the convex spherical portion 521 and the carrier 52, and reliability of the periscope camera motor 5 is ensured. For example, in some implementations, the substrate 6 is a connecting plate, and the convex spherical portion 521 is disposed in a middle portion of the connecting plate. The plate-like substrate 6 may be easily wrapped inside the carrier 52, and two side surfaces of the plate-like substrate 6 have sufficient pressure bearing surfaces, to provide large friction and tension.

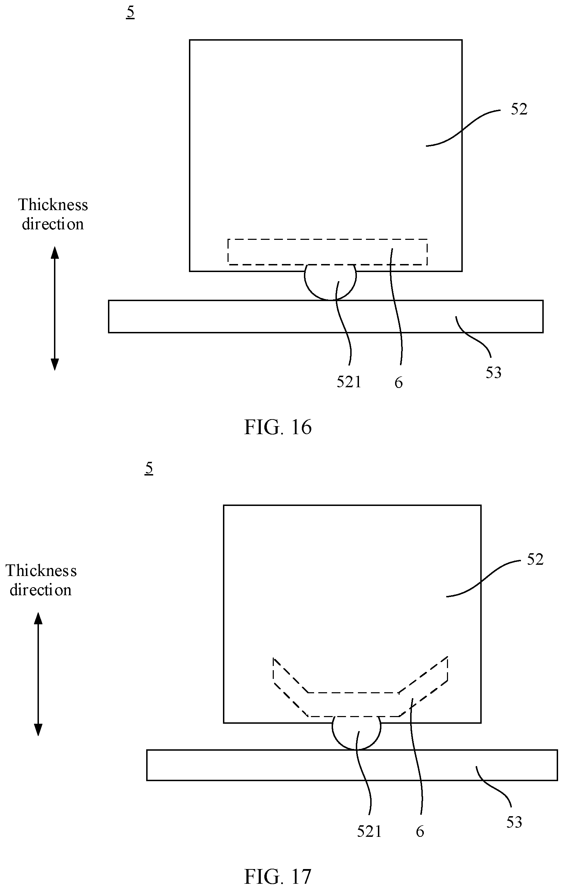

In a procedure of using the periscope camera motor 5, a force exerted on the convex spherical portion 521 is mainly caused by vibration that is of the convex spherical portion 521 and that faces the inside of the carrier 52. FIG. 16 is a schematic diagram of a structure in which the substrate 6 of the periscope camera motor 5 is the connecting plate. In some embodiments, an extending direction of the connecting plate (the substrate 6 in the figure) is parallel to an extending direction of an outer surface that is of the carrier 52 and that is closest to the connecting plate. In this way, a side wall that is of the connecting plate and that faces the convex spherical portion 521 cooperates with the inside of the carrier 52 in a large area. This has a good effect for displacement that is of the convex spherical portion 521 and that is perpendicular to the connecting plate.

To further increase resistance to vibration that is of the convex spherical portion 521 and that faces the inside of the carrier 52 and ensure that the relative positions of the convex spherical portion 521 and the carrier 52 do not change, FIG. 17 is a schematic diagram of a structure in which two ends of the connecting plate of the periscope camera motor 5 extend towards a side away from the convex spherical portion 521. The two ends of the connecting plate (the substrate 6 in the figure) extend towards the side away from the convex spherical portion 521. In this way, the connecting plate has greater tension and buffer for a force that is of the convex spherical portion 521 and that faces the inside of the carrier 52, to ensure that vibration that is of the convex spherical portion 521 and that faces the inside of the carrier 52 does not change the relative positions of the convex spherical portion 521 and the carrier 52.

In addition, it should be noted that the substrate 6 and the convex spherical portion 521 are also an integrated structure, and the substrate 6 and the convex spherical portion 521 jointly form the connecting part. The substrate 6 and the convex spherical portion 521 form the integrated structure, and there are a plurality of implementations of the structure. For example, the convex spherical portion 521 may be stamped on the substrate 6, so that the convex spherical portion 521 and the substrate 6 form the integrated structure. Alternatively, the convex spherical portion 521 may be welded on the substrate 6, so that the convex spherical portion 521 and the substrate 6 form the integrated structure. Alternatively, the convex spherical portion 521 and the substrate 6 are integrally formed through casting, so that the convex spherical portion 521 and the substrate 6 form the integrated structure.

Both the substrate 6 and the convex spherical portion 521 need to withstand large and long-time vibration impact. Therefore, a selected material needs to ensure specific strength. For example, both the substrate 6 and the convex spherical portion 521 are manufactured by using metal or an alloy with high strength. The substrate 6 and the convex spherical portion 521 are connected together by using an integrated molding process, that is, as mentioned in the foregoing solutions, the convex spherical portion 521 is a protrusion structure formed through stamping on the substrate 6; or the convex spherical portion 521 and the substrate 6 are separately manufactured and then integrally fastened through welding; or the convex spherical portion 521 and the substrate 6 are directly formed integrally through casting by using a casting die.

In the descriptions of this specification, the described specific features, structures, materials, or characteristics may be combined in a proper manner in any one or more of embodiments or examples.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A camera motor, comprising:
a base;
a carrier, wherein the carrier is configured to: mount and fasten a to-be-driven object; and
a connecting part, wherein the carrier is formed on an outer surface of the connecting part, at least a part of the connecting part is located inside the carrier, the connecting part and the carrier are integrally formed, and the connecting part is configured to: support and connect the carrier on and to the base.

2. The camera motor according to claim 1, wherein the connecting part comprises a spring plate, the spring plate comprises a fastening portion and an elastic arm portion, the fastening portion is located inside the carrier, the elastic arm portion is connected to the base, and the elastic arm portion is fastened to the carrier through the fastening portion.

3. The camera motor according to claim 2, wherein there are a plurality of spring plates, and at least one spring plate is integrally formed with the carrier.

4. The camera motor according to claim 2 or 3, wherein the spring plate comprises an upper spring plate and a lower spring plate, and the upper spring plate and the lower spring plate are respectively disposed close to two opposite sides of the carrier; and
the carrier is formed on an outer surface of the upper spring plate, and the carrier and the upper spring plate are integrally formed; or
the carrier is formed on an outer surface of the lower spring plate, and the carrier and the lower spring plate are integrally formed; or
the carrier is formed on outer surfaces of the upper spring plate and the lower spring plate, and the carrier, the upper spring plate, and the lower spring plate are integrally formed.

5. The camera motor according to any one of claims 2 to 4, wherein the carrier and the spring plate are formed through injection molding.

6. The camera motor according to any one of claims 1 to 5, wherein the camera motor comprises a Hall magnet and a Hall sensor, the Hall magnet is wrapped inside the carrier, the Hall magnet and the carrier are integrally formed, the Hall sensor is disposed on the base, and the Hall magnet and the Hall sensor cooperate, to detect relative positions of the base and the carrier.

7. The camera motor according to claim 6, wherein the Hall magnet is disposed close to a side that is of the carrier and that faces the Hall sensor.

8. The camera motor according to claim 6 or 7, wherein the carrier and the Hall magnet are formed through injection molding.

9. The camera motor according to any one of claims 1 to 8, wherein the connecting part comprises a substrate and a convex spherical portion formed on the substrate, the substrate is located inside the carrier, the substrate and the carrier are integrally formed, and the convex spherical portion abuts against the base.

10. The camera motor according to claim 9, wherein the substrate is a connecting plate, and the convex spherical portion is disposed in a middle portion of the connecting plate.

11. The camera motor according to claim 9 or 10, wherein the convex spherical portion is formed through stamping on the substrate.

12. The camera motor according to claim 9 or 10, wherein the convex spherical portion is welded on the substrate.

13. The camera motor according to claim 9 or 10, wherein the convex spherical portion and the substrate are integrally formed through casting.

14. The camera motor according to any one of claims 10 to 13, wherein an extending direction of the connecting plate is parallel to an extending direction of an outer surface that is of the carrier and that is closest to the connecting plate.

15. The camera motor according to any one of claims 10 to 13, wherein two ends of the connecting plate extend towards a side away from the convex spherical portion.

16. A camera module, comprising:
the camera motor according to any one of claims 1 to 15; and
a to-be-driven object, wherein the to-be-driven object is disposed on the carrier of the camera motor, and the to-be-driven object is an optical lens or a prism module.

17. An electronic device, comprising:
the camera module according to claim 16; and
a controller, wherein the controller is electrically connected to the camera motor of the camera module, and the controller is configured to control the camera motor.
